# DEMANDE DE BREVET EUROPEEN

(11) **EP 4 840 658 A1**
(43) Date de publication de la demande: **18.11.2026**
(21) Numéro de dépôt: 26172319.1
(22) Date de dépôt: 14.04.2026
(51) Int. Cl.: B60H 1/26, B60H 1/00, B60H 1/28, B60J 1/20

(54) **SYSTÈME DE VENTILATION DE VÉHICULE AUTOMOBILE À TROIS ROUES**

(30) Priorité: 16.05.2025 FR 2505249
(71) Demandeur: Stellantis Auto SAS, 78300 Poissy (FR)
(72) Inventeur: ARRAMACH, JALLAL, 20270 CASABLANCA (MA); LAKNOUZE, MOHAMMED, 20270 CASABLANCA (MA); OUMRI, MOHAMED, 20270 CASABLANCA (MA); IBNORACHID, ZAKARIA, 20270 CASABLANCA (MA); SALE, MEHDI, 20270 CASABLANCA (MA); JAIDI, AHMED, 20270 CASABLANCA (MA); LAFTOUHI, KHALIL, 20270 CASABLANCA (MA)
(74) Mandataire: BCIP

(57) **Abrégé**

L'invention a pour objet un véhicule automobile comprenant : un habitacle passager (14) ; un pare-brise (18) en avant de l'habitacle passager (14) ; un toit (20) au-dessus du pare-brise ; un passage supérieur (32) entre le pare-brise (18) et le toit (20), ledit passage supérieur (32) étant configuré pour permettre une entrée d'un flux d'air (34) dans l'habitacle passager lorsque ledit véhicule automobile avance. Le véhicule automobile comprend des moyens de déflection (30) configurés pour dévier le flux d'air (34) dans l'habitacle passager (14) vers le bas. Le flux d'air (34) atteint la tête d'un conducteur (16) pour le rafraîchir. Le véhicule automobile est un véhicule monoplace sans portes latérales, et à trois roues dont une en position centrale avant.

## Description

L'invention traite de la ventilation d'un habitacle de véhicule automobile. L'invention concerne le refroidissement d'un passager de véhicule automobile. L'invention se rapporte au domaine des véhicules automobiles à trois roues et dépourvus de portes latérales. L'invention a pour objet un véhicule automobile.

La plupart des véhicules à trois roues sans portes compte sur l'aération naturelle, où l'absence de portes permet théoriquement à l'air de circuler librement dans l'habitacle. Cependant, cela ne garantit pas un flux d'air efficace, en particulier dans les conditions où une dépression se forme à l'intérieur, empêchant l'air de pénétrer et d'atteindre le conducteur de manière adéquate.

Pour le confort des passagers, les véhicules à trois roues sans portes présentent alors des systèmes assurant une ventilation et une aération complémentaires. Ces systèmes s'orientent vers une ventilation passive ou une ventilation active. Dans le cas d'une ventilation passive, le véhicule à trois roues utilise des ouvertures fixes ou des grilles de ventilation sur le toit comme sur les côtés pour permettre à l'air de circuler naturellement dans l'habitacle. Ces solutions ne nécessitent pas de systèmes mécaniques, mais leur efficacité dépend fortement de la vitesse du véhicule et des conditions extérieures.

Dans le cas d'une ventilation active, le véhicule à trois roues est équipé de ventilateurs électriques pour forcer l'air à circuler à l'intérieur de l'habitacle. Ces systèmes peuvent améliorer l'aération, mais ils consomment de l'énergie et ajoutent de la complexité au véhicule. Ils se heurtent également aux conditions extérieures.

Des dispositifs de ventilation réglables, comme des ouvertures d'air ajustables au niveau des portes ou des fenêtres arrière, sont parfois utilisés pour diriger l'air vers les zones spécifiques de l'habitacle, mais ces systèmes ne sont pas toujours adaptés aux véhicules à trois roues sans portes. Ces systèmes peuvent manquer d'efficacité pour assurer une ventilation adéquate sans créer de turbulences.

Certaines solutions plus récentes ont intégré des fenêtres arrière coulissantes pour contrôler l'air qui entre dans l'habitacle. Cependant, ces systèmes ne sont pas toujours assez efficaces pour diriger l'air spécifiquement vers le visage du conducteur. Ou encore, des canaux d'air internes ou des diffuseurs d'air ont été proposés dans certains véhicules, mais leurs performances dans le contexte des véhicules trois roues sans portes sont encore limitées.

Au lieu d'atteindre sa cible, l'air insufflé s'échappe principalement par les portes ou les fenêtres, ce qui ne permet pas d'atteindre le conducteur de manière optimale, notamment dans les zones frontale, gauche et droite de la tête où l'air est crucial pour son confort thermique.

Les solutions passives, comme les grilles ou les ouvertures fixes, n'offrent pas un contrôle suffisant sur la direction du flux d'air, ce qui rend difficile de diriger l'air vers des zones spécifiques du conducteur, comme son visage ou sa poitrine. Cela peut rendre l'aération inégale et inconfortable, surtout dans les climats chauds.

Le document US5544929A présente un véhicule capable de protéger le conducteur des rayons directs du soleil provenant de l'avant ou de l'arrière de la carrosserie, et d'accroître l'attention portée à l'avant. Ce véhicule est doté d'une visière avant dépassant de la partie avant de la carrosserie et d'une visière arrière dépassant de la partie arrière de la carrosserie. Un système présente une aération avec une entrée d'air au-dessus du pare-brise.

L'invention a pour objectif de répondre à au moins un des problèmes ou inconvénients rencontrés dans l'art antérieur. En particulier, l'invention a pour objectif d'améliorer la ventilation d'un habitacle de véhicule automobile. L'invention a également pour objectif d'optimiser le confort thermique, notamment au niveau du visage, la visibilité et le coût d'un véhicule automobile.

Selon un premier aspect, l'invention propose un véhicule automobile comprenant : un habitacle passager ; un pare-brise en avant de l'habitacle passager ; un toit au-dessus du pare-brise ; un passage supérieur entre le pare-brise et le toit, ledit passage supérieur étant configuré pour permettre une entrée d'un flux d'air dans l'habitacle passager lorsque ledit véhicule automobile avance ; **remarquable en ce que** le véhicule automobile comprend des moyens de déflection configurés pour dévier le flux d'air dans l'habitacle passager vers le bas.

Les moyens de déflection permettent de rabattre le flux d'air entrant, et de l'orienter vers le conducteur, notamment vers sa tête. Ainsi, l'invention améliore significativement le confort, et en particulier le confort ressenti par le conducteur ou tout passager avant dans l'habitacle passager. L'invention apporte une solution simple et passive, ce qui optimise les coûts de fabrication comme les coûts de fonctionnement.

Préférentiellement, les moyens de déflection sont verticalement au niveau du passage supérieur.

Préférentiellement, le passage supérieur comprend une entrée et une sortie, les moyens de déflection étant verticalement au niveau de la sortie.

Préférentiellement, les moyens de déflection s'étendent longitudinalement en arrière du passage supérieur.

Préférentiellement, les moyens de déflection comprennent au moins un bras de fixation s'étendant en avant.

Préférentiellement, les moyens de déflection comprennent un panneau incliné d'un angle d'inclinaison par rapport à une direction horizontale, ledit angle d'inclinaison étant compris entre 10° et 70°, plus préférentiellement compris entre 20° et 45°.

Préférentiellement, le véhicule automobile comprend une traverse supérieure, le passage supérieur s'étendant entre la traverse supérieure et le toit, le toit et les moyens de déflection étant fixés à ladite traverse supérieure.

Préférentiellement, la traverse supérieure comprend une face supérieure, les moyens de déflection étant fixé à ladite face supérieure.

Préférentiellement, les moyens de déflection comprennent une liaison pivot avec un axe de pivotement transversal.

Préférentiellement, les moyens de déflection sont au-dessus du pare-brise.

Préférentiellement, le toit comprend une protrusion faisant saillie en avant du pare-brise, le passage supérieur s'étendant entre la protrusion et le pare-brise.

Préférentiellement, transversalement, le passage supérieur comprend un centre, les moyens de déflection étant transversalement au niveau dudit centre.

Préférentiellement, le véhicule automobile comprend une roue centrale avant ; et/ou le véhicule automobile comprend un unique siège dans l'habitacle passager.

Préférentiellement, l'habitacle passager comprend des ouvertures latérales, lesdites ouvertures latérales étant libres de portes latérales ; et/ou le véhicule automobile comprend un plateau de chargement derrière l'habitacle passager

Préférentiellement, le panneau comprend une largeur transversale d'au moins 200 mm, et/ou une longueur d'au moins 50 mm.

Préférentiellement, le panneau comprend une largeur transversale d'au moins 300 mm, et/ou une longueur d'au moins 80 mm.

Préférentiellement, le panneau comprend un bord avant et un bord arrière sous le bord avant.

Préférentiellement, les moyens de déflection comprennent des moyens de réglage d'orientation.

Préférentiellement, le plateau de chargement s'étend sur toute la largeur transversale du véhicule automobile.

Préférentiellement, le véhicule automobile comprend une roue avant longitudinalement au niveau de l'habitacle passager.

Préférentiellement, la roue est une roue centrale avant.

Préférentiellement, le véhicule automobile comprend une largeur d'au plus 1.20 m.

Préférentiellement, le véhicule automobile comprend une longueur d'au plus 3.00 m, plus préférentiellement d'au plus 2.00 m.

Préférentiellement, le passage supérieur s'étend en avant des ouvertures latérales.

Selon un autre aspect, l'invention propose un véhicule automobile comprenant : une cabine avant destinée à recevoir un passager ; un pare-brise en avant de la cabine avant ; un toit au-dessus du pare-brise ; un passage supérieur entre le pare-brise et le toit, ledit passage supérieur étant configuré pour permettre une entrée d'air dans la cabine avant lorsque ledit véhicule automobile avance ; **remarquable en ce que** le véhicule automobile comprend une chicane configurée orienter l'entrée d'air contre le passager ; préférentiellement contre la tête dudit passager.

Selon un autre aspect, l'invention propose un véhicule automobile comprenant : une roue centrale avant ; un habitacle passager avec des ouvertures latérales libres de portes latérales ; un pare-brise en avant des ouvertures latérales ; un toit au-dessus du pare-brise et/ou des ouvertures latérales ; un passage supérieur au-dessus du pare-brise, ledit passage supérieur étant configuré pour permettre une entrée d'un flux d'air lorsque ledit véhicule automobile circule ; **remarquable en ce que** le véhicule automobile comprend des moyens de déflection configurés pour guider le flux d'air vers le bas.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 représente une vue isométrique d'une cabine avant de véhicule automobile selon l'invention.
La figure 3 montre une vue de côté d'un habitacle de véhicule automobile selon l'invention.
La figure 4 illustre des moyens de déflection de véhicule automobile selon l'invention.

Dans la description qui suit, le terme « comprendre » est synonyme de « inclure » et n'est pas limitatif en ce qu'il autorise la présence d'autres éléments dans le véhicule automobile auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les égalités entre les valeurs ne sont pas à entendre au sens strict dans la mesure où chaque égalité autorise une variation d'au plus 10%, préférentiellement au plus 5%, plus préférentiellement au plus 2%, entre ces valeurs.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage du véhicule automobile, à moins que le contraire ne soit mentionné explicitement.

Au travers de la description, les différentes figures utilisent les mêmes signes de référence pour désigner des entités identiques ou similaires.

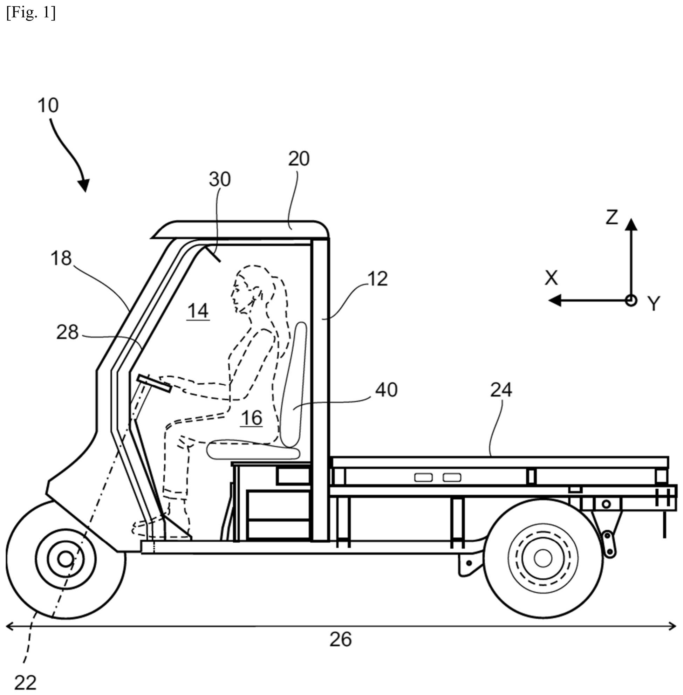

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure 12. La structure 12 forme une caisse extérieure, ou encore une ossature principale du véhicule automobile. La structure 12 peut être formée d'un assemblage de tôles embouties et soudées les unes aux autres. La structure 12 comprend également des longerons, des piliers. La structure 12 relie différentes parties du véhicule automobile 10. La structure 12 forme un support de montage pour le groupe motopropulseur, les systèmes de suspension, le système de direction, les systèmes de freinage. La structure 12 matérialise une cabine, telle une cabine avant.

Le véhicule automobile 10 comprend un habitacle passager 14 destiné à accueillir un conducteur 16 ; un pare-brise 18 en avant de l'habitacle passager 14 ; un toit 20 au-dessus du pare-brise 18. L'habitacle passager 14 est dans la cabine avant. Le toit 20 recouvre et protège l'habitacle passager 14. Le pare-brise 18 comprend une glace transparente. Il permet à un conducteur 16 de voir au travers. Le pare-brise 18 est une vitre avant transparente.

Le véhicule automobile 10 comprend une roue avant longitudinalement au niveau de l'habitacle passager 14. Le véhicule automobile 10 comprend une unique roue avant. La roue avant est préférentiellement une roue centrale avant 22. Elle est reliée au système de direction. Il comprend deux roues arrière. La roue centrale avant 22 améliore la manœuvrabilité et la masse. Elle est une roue directrice.

Préférentiellement, le véhicule automobile 10 est un véhicule à trois roues.

Le véhicule automobile 10 comprend un plateau de chargement 24. Le plateau de chargement 24 forme un compartiment arrière. Le plateau de chargement 24 est plan. Il est derrière l'habitacle passager 14. Le plateau de chargement 24 est également connu sous le nom anglo-saxon « flat bed ». Le plateau de chargement 24 s'étend sur toute la largeur transversale du véhicule automobile 10.

L'habitacle passager 14 comprend une première largeur. Le plateau de chargement 24 comprend une deuxième largeur supérieure ou égale à la première largeur. Les largeurs sont des largeurs maximales, elles sont mesurées transversalement. Cette configuration optimise la compacité du véhicule et sa capacité de chargement.

Le véhicule automobile 10 est essentiellement un véhicule compact. Il optimise la masse et la manœuvrabilité. Le véhicule automobile 10 comprend une largeur d'au plus 1.40 m, préférentiellement d'au plus 1.20 m. Le véhicule automobile 10 comprend une première longueur 26 d'au plus 3.00 m, préférentiellement d'au plus 2.50 m ; plus préférentiellement d'au plus 2.00 m. La première longueur 26 est une longueur maximale. Elle est mesurée longitudinalement.

L'habitacle passager 14 comprend des ouvertures latérales 28. Les ouvertures latérales 28 sont libres de portes latérales. Elles restent dégagées lors du fonctionnement du véhicule automobile 10. L'absence de portes latérales optimise la masse, le coût, et l'aération.

De manière générale, un véhicule automobile compact sans portes latérales, qu'il soit à roue centrale avant ou à habitacle avec un seul siège, présente une dépression marquée dans son habitacle passager lorsqu'il circule. Cette dépression appelle des solutions spécifiques pour atteindre une ventilation homogène. Un véhicule automobile à cabine avant présente les mêmes symptômes.

Le véhicule automobile 10 comprend des moyens de déflection 30. Les moyens de déflection 30 sont agencés dans l'habitacle passager 14.

Selon un mode de réalisation de l'invention, le véhicule automobile 10 comprend un unique siège 40 dans l'habitacle passager 14. Le siège 40 comprend une assise et préférentiellement un dossier. Il forme une place assise pour le conducteur 16. La solution à un unique siège 40 optimise la masse et la compacité du véhicule automobile. Elle optimise également la consommation d'énergie.

Le véhicule automobile 10 peut par exemple être un véhicule automobile particulier ou un véhicule automobile utilitaire.

Selon une alternative de l'invention, le véhicule automobile comprend deux roues avant et une roue arrière.

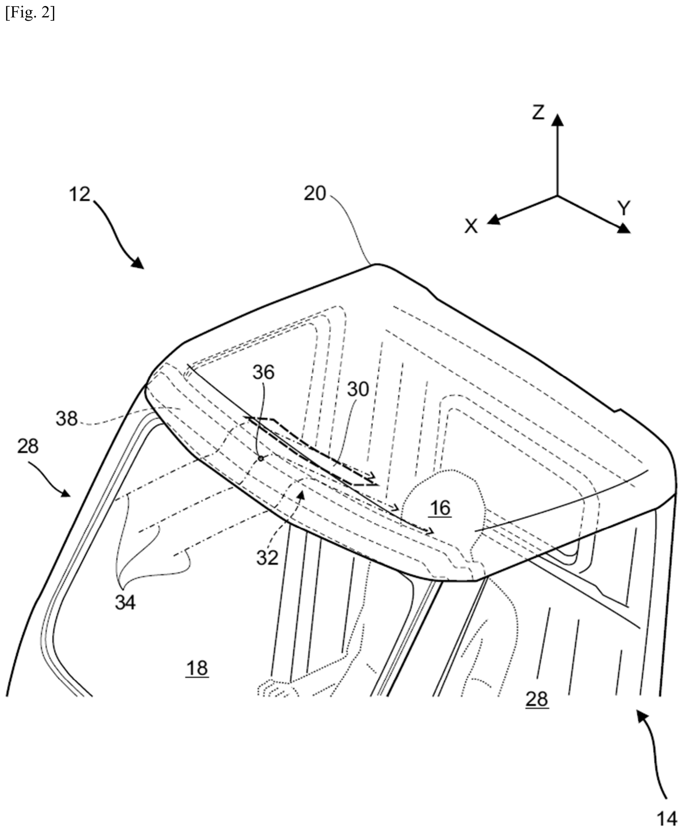

La figure 2 présente une partie supérieure de cabine avant de véhicule automobile, selon un mode de réalisation de l'invention. Le véhicule automobile peut correspondre à celui présenté en relation avec la figure 1. La cabine délimite l'habitacle passager 14. Un conducteur 16 est installé en position centrale avant.

Le véhicule automobile comprend un pare-brise 18 en position frontale, un toit 20 recouvrant l'habitacle passager 14 ; un passage supérieur 32 entre le pare-brise 18 et le toit 20. Le passage supérieur 32 est configuré pour permettre une entrée d'un flux d'air 34 dans l'habitacle passager 14 lorsque ledit véhicule automobile avance. Le souffle contre le véhicule automobile s'engouffre naturellement dans l'habitacle passager 14 via le passage supérieur 32 lorsque le véhicule automobile circule en marche avant. Le passage supérieur 32 forme une entrée d'air. Il forme une admission, une aspiration. Il est un passage longitudinal.

Le véhicule automobile comprend des moyens de déflection 30 configurés pour dévier le flux d'air 34 dans l'habitacle passager 14 vers le bas. Les moyens de déflection 30 guident le flux d'air 34 verticalement à distance du toit 20. Ce flux d'air 34 contribue à ventiler l'habitacle passager 14. Il améliore le ressenti de fraicheur pour le(s) passager(s), notamment le conducteur 16. Les moyens de déflection 30 rabattent le flux d'air 34. Ils permettent une déviation par rapport au toit 20. Ainsi, le flux d'air 34 atteint le conducteur 16, ce qui permet de le rafraichir. Grâce à la position haute du passage supérieur 32 et aux moyens de déflection 30, le flux d'air 34 atteint la tête du conducteur 16, ce qui augmente la sensation de fraicheur. Cet aspect est notamment atteint pour un conducteur de taille moyenne.

Les moyens de déflection 30 s'étendent longitudinalement en arrière du passage supérieur 32. Ils sont en aval du passage supérieur 32 selon le sens d'écoulement du flux d'air 34. Ceci limite la perte de charge dans le passage supérieur 32, et préserve le débit du flux d'air 34 pour une vitesse de déplacement donnée. L'apparition de turbulences diminue.

Les moyens de déflection 30, notamment en combinaison avec le passage supérieur 32, forment une chicane. La chicane est configurée orienter l'entrée d'air contre le conducteur 16 ; préférentiellement contre la tête dudit conducteur 16. Selon un mode de réalisation de l'invention, le passage supérieur 32 comprend une série de canaux longitudinaux.

Transversalement, le passage supérieur 32 comprend un centre 36. Le centre 36 est un point milieu. Les moyens de déflection 30 sont transversalement au niveau dudit centre 36. Les moyens de déflection 30 sont transversalement au centre afin d'optimiser le brassage de l'air dans l'habitacle passager 14, et donc l'aération.

Le véhicule automobile comprend une traverse supérieure 38. La traverse supérieure 38 forme une poutre transversale. La traverse supérieure 38 est au-dessus du pare-brise 18. Le passage supérieur 32 s'étend entre la traverse supérieure 38 et le toit 20. Le passage supérieur 32 s'étend entre le pare-brise 18 et le toit 20. Donc, le passage supérieur 32 est formé dans l'épaisseur de la structure 12. Les canaux sont formés par la traverse supérieure 38.

Les ouvertures latérales 28 sont dépourvues d'ouvrants latéraux. Le passage supérieur 32 est un passage avant. Le passage supérieur 32 s'étend en avant des ouvertures latérales 28. Cet aspect tend à allonger le passage supérieur 32 vers l'avant, et donc à contrôler le flux d'air 34 qui le traverse.

Le présent enseignement est décrit en relation avec une implantation des moyens de déflection 30 en face du conducteur 16. Toutefois, les caractéristiques peuvent être appliquées à des moyens de déflection 30 en face d'un passager à côté du conducteur 16.

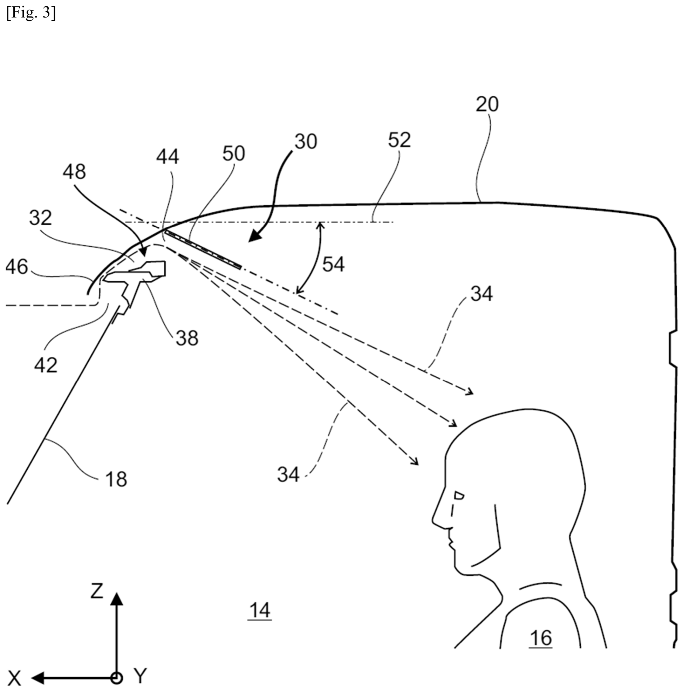

La figure 3 présente une coupe d'une zone supérieure d'habitacle passager 14 de véhicule automobile, selon un mode de réalisation de l'invention. Le véhicule automobile peut correspondre à celui présenté en relation avec l'une des figures 1 à 2. Un conducteur 16 est représenté.

Le véhicule automobile comprend : un habitacle passager 14 ; un pare-brise 18 en avant de l'habitacle passager 14 ; un toit 20 au-dessus du pare-brise 18 ; un passage supérieur 32 entre ; préférentiellement verticalement entre ; le pare-brise 18 et le toit 20. Lorsque le véhicule automobile avance, le passage supérieur 32 est configuré pour permettre une entrée d'un flux d'air 34 dans l'habitacle passager 14. Le flux d'air 34 est généré dès que le véhicule automobile évolue à une vitesse supérieure ou égale à 10 km/h, préférentiellement supérieure ou égale à 20 km/h.

Le véhicule automobile comprend des moyens de déflection 30 configurés pour dévier le flux d'air 34 dans l'habitacle passager 14 vers le bas. Ceci renvoie le flux d'air 34 vers le siège, au moins partiellement. Ainsi le flux d'air est décollé du toit 20, ce qui limite l'effet « Coanda ». Le flux d'air 34 atteint le conducteur 16 malgré la dépression régnant dans l'habitacle passager 14 lorsque le véhicule automobile avance.

Les moyens de déflection 30 sont verticalement au niveau du passage supérieur 32. Le passage supérieur 32 comprend une entrée 42 et une sortie 44. La sortie 44 est longitudinalement opposée à l'entrée 42. Les moyens de déflection 30 sont verticalement au niveau de la sortie 44. Ils sont en regard de la sortie 44. Ainsi, les moyens de déflection 30 captent efficacement le flux d'air 34 afin d'agir sur son écoulement.

De même, les moyens de déflection 30 s'étendent longitudinalement en arrière du passage supérieur 32. Préférentiellement, les moyens de déflection 30 commencent à au plus 50 cm du passage supérieur 32, notamment de la sortie 44. Plus préférentiellement, les moyens de déflection 30 commencent à au plus 20 cm du passage supérieur 32, notamment de la sortie 44. Cela optimise la compacité et l'efficacité de déviation.

Le toit 20 comprend une protrusion 46 faisant saillie en avant par rapport au pare-brise 18. La protrusion 46 est une protrusion horizontale. Le passage supérieur 32 s'étend entre la protrusion 46 et le pare-brise 18. Le passage supérieur 32 forme un écart, préférentiellement un écart vertical. Le toit 20 comprend un pavillon formant la protrusion 46. Le pavillon comprend une tôle ou une coque. Il délimite le passage supérieur 32.

Le véhicule automobile comprend une traverse supérieure 38. L'écart vertical entre la protrusion 46 et la traverse supérieure 38 pour le pare-brise permet d'attirer l'air dans l'habitacle passager 14, tout en limitant les effets parasites de la dépression. La protrusion 46 est une avancée. La protrusion 46 forme un porte-à-faux.

Le passage supérieur 32 s'étend le long de la traverse supérieure 38 et du toit 20. La traverse supérieure 38 comprend une face supérieure 48. La face supérieure 48 peut matérialiser les canaux. Les moyens de déflection 30 sont fixés à ladite face supérieure 48. La face supérieure 48 est en regard du toit 20. La face supérieure 48 délimite le passage supérieur 32. Le pare-brise, le toit 20 sont fixés à la traverse supérieure 38. Préférentiellement, les moyens de déflection 30 sont fixés à ladite traverse supérieure 38.

L'invention propose une solution efficace, simple et économe en énergie pour améliorer l'aération et le confort thermique, notamment des véhicules à trois roues sans portes, particulièrement dans les environnements chauds. Elle combine une ingénierie aérodynamique ciblée en réponse à l'absence de portes latérales, et un système passif de gestion du flux d'air 34 pour atteindre des résultats optimisés.

En somme, l'invention offre un gain économique significatif en termes de coûts de production et d'entretien, d'amélioration de l'efficacité énergétique, et de réduction de l'empreinte carbone, tout en répondant à la demande de confort thermique pour les conducteurs dans des pays chauds.

Les moyens de déflection 30 comprennent un panneau 50 incliné par rapport à une direction horizontale 52 d'un angle d'inclinaison 54. Le panneau 50 forme généralement une plaque. Sa géométrie est configurée pour capter et guider le flux d'air 34. L'angle d'inclinaison est compris entre 10° et 70°, préférentiellement compris entre 20° et 45°.

Le toit 20 comprend un pavillon s'étendant verticalement au niveau de la traverse supérieure 38. Les moyens de déflection 30 sont au-dessus du pare-brise 18. Ils s'étendent verticalement depuis le toit 20. Les moyens de déflection 30 ne limitent pas le champ de vision du conducteur 16, ce qui préserve la sécurité. Les moyens de déflection 30 sont longitudinalement à distance du passage supérieur 32. Ils s'étendent longitudinalement à distance du passage supérieur 32.

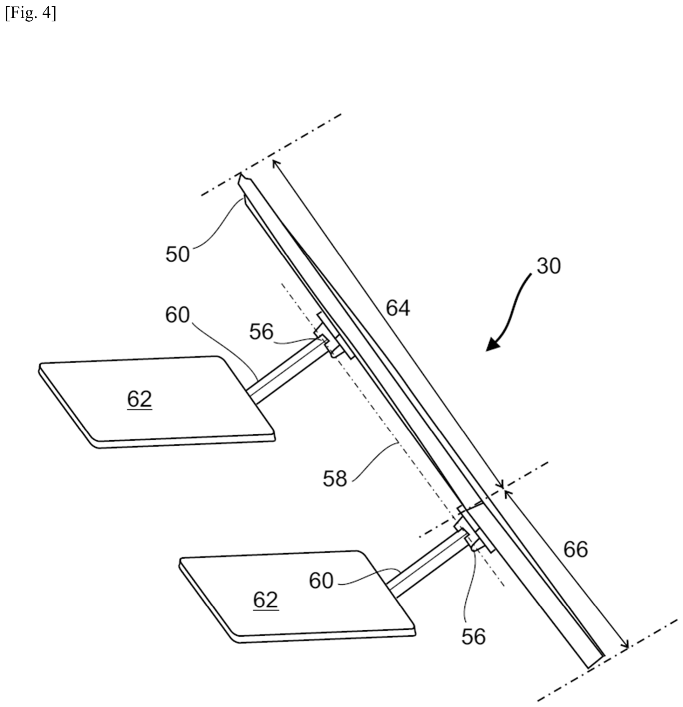

La figure 4 présente des moyens de déflection 30 de véhicule automobile, selon un mode de réalisation de l'invention. Le véhicule automobile peut correspondre à celui présenté en relation avec l'une des figures 1 à 3.

Les moyens de déflection 30 forment une aile de guidage. Le véhicule automobile, notamment les moyens de déflection 30, comprend au moins une liaison pivot 56. Les liaisons pivots 56 sont liées au panneau 50. Chaque liaison pivot 56 permet d'adapter, de régler la déviation du flux d'air. Ainsi, le conducteur peut moduler l'intensité du flux d'air qu'il reçoit. Il peut également décaler la zone de son corps atteinte par le flux d'air. La liaison pivot 56 améliore le confort. La présente illustration est dans l'épaisseur du panneau 50, selon le plan général du panneau 50.

Grâce à la ou aux liaisons pivots 56, les moyens de déflection sont mobiles entre une première position angulaire et une deuxième position angulaire. Lorsque les moyens de déflection comprennent au moins une liaison pivot 56, l'angle d'inclinaison est mesuré à une position angulaire centrale, au milieu entre la première position angulaire et la deuxième position angulaire.

Là où chaque liaison pivot 56 présente un axe de pivotement 58 transversal. Selon une un mode de réalisation, les moyens de déflection 30 comprennent deux liaisons pivots 56. De manière générale, chaque liaison pivot forme des moyens de réglage d'orientation pour les moyens de déflection. Le véhicule automobile comprend des moyens de blocage configurés pour limiter l'amplitude de rotation de la liaison pivot de sorte à dévier le flux d'air dans l'habitacle passager vers le bas. Les moyens de blocage comprennent une butée angulaire dans la liaison pivot ou sous le toit.

Les moyens de déflection 30 comprennent au moins un bras de fixation 60, préférentiellement deux bras de fixation 60. Le bras de fixation 60 s'étend en avant. Il est un bras avant. Le bras de fixation 60 permet un déport entre la surface active des moyens de déflection 30 et le passage supérieur. Ceci limite les pertes de charge, et améliore le guidage. Les liaisons pivots 56 sont entre les bras de fixation 60 et le panneau 50. Le panneau 50 comprend un bord avant et un bord arrière sous le bord avant. Ceci permet de définir la direction de déviation. L'orientation des bras de fixation 60 par rapport au panneau 50 est purement illustrative.

Les moyens de déflection 30 comprennent des platines de fixation 62, préférentiellement en avant des bras de fixation 60. Les platines de fixation 62 sont destinées à être fixées à la traverse supérieure (non représentée). Selon une alternative de l'invention, les platines de fixation sont fixées au toit.

Selon un mode de réalisation, les moyens de déflection 30 comprennent des liaisons pivots 56 en avant et en arrière des bras de fixation 60. Les bras de fixation 60 forment des bielles.

Selon une alternative ou une option de l'invention, les liaisons pivots 56 sont en extrémités avant des bras de fixation 60.

Selon une alternative de l'invention, les moyens de déflection sont rigidement liés à la structure du véhicule automobile. Ils sont libres de liaison pivot.

Le panneau 50 comprend une largeur transversale 64 d'au moins 200 mm ; préférentiellement d'au moins 300 mm. Le panneau 50 comprend une deuxième longueur 66 d'au moins 50 mm ; préférentiellement d'au moins 80 mm. La largeur transversale 64 est mesurée horizontalement. La deuxième longueur 66 est mesurée perpendiculairement à la largeur transversale 64. Elles sont des valeurs moyennes. Ces valeurs optimisent le flux dévié, et donc le confort. Elles optimisent la compacité, ce qui permet de préserver le champ de vision. En outre, cela évite un contact avec la tête dans l'éventualité d'une collision frontale. L'invention optimise la sécurité.

Selon un mode de réalisation préféré, les moyens de déflection 30 comprennent un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylène, polyamide, polyphtalamide, polyétheréthercétone, polysulfure de phénylène, polyamide-imide, polyétherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

Les moyens de déflection 30 comprennent au moins 10 % en poids de matériau plastique recyclé basé sur le poids total du matériau plastique ; de préférence de 10 à 80% en poids ; plus préférentiellement de 20 à 60% en poids ou de 30 à 40% en poids. L'emploi de matériau plastique recyclé diminue l'empreinte écologique du véhicule.

L'invention comprend la combinaison de tous les modes de réalisation illustrés par toutes les figures.

Les figures 2 à 4 sont des vues isométriques. Elles respectent chacune une échelle spécifique, des angles réels et des proportions réelles.

## Revendications

1. Véhicule automobile (10) comprenant : un habitacle passager (14) ; un pare-brise (18) en avant de l'habitacle passager (14) ; un toit (20) au-dessus du pare-brise (18) ; un passage supérieur (32) entre le pare-brise (18) et le toit (20), ledit passage supérieur (32) étant configuré pour permettre une entrée d'un flux d'air (34) dans l'habitacle passager (14) lorsque ledit véhicule automobile (10) avance ; **caractérisé en ce que** le véhicule automobile (10) comprend des moyens de déflection (30) configurés pour dévier le flux d'air (34) dans l'habitacle passager (14) vers le bas.

2. Véhicule automobile (10) selon la revendication 1, **caractérisé en ce que** les moyens de déflection (30) sont verticalement au niveau du passage supérieur (32) ; préférentiellement, le passage supérieur (32) comprend une entrée (42) et une sortie (44), les moyens de déflection (30) étant verticalement au niveau de la sortie (44).

3. Véhicule automobile (10) selon l'une des revendications 1 à 2, **caractérisé en ce que** les moyens de déflection (30) s'étendent longitudinalement en arrière du passage supérieur (32) ; préférentiellement, les moyens de déflection (30) comprennent au moins un bras de fixation (60) s'étendant en avant.

4. Véhicule automobile (10) selon l'une des revendications 1 à 3, **caractérisé en ce que** les moyens de déflection (30) comprennent un panneau (50) incliné d'un angle d'inclinaison (54) par rapport à une direction horizontale (52), ledit angle d'inclinaison (54) étant compris entre 10° et 70°, préférentiellement compris entre 20° et 45°.

5. Véhicule automobile (10) selon l'une des revendications 1 à 4, **caractérisé en ce que** le véhicule automobile (10) comprend une traverse supérieure (38), le passage supérieur (32) s'étendant entre la traverse supérieure (38) et le toit (20), le toit (20) et les moyens de déflection (30) étant fixés à ladite traverse supérieure (38) ; préférentiellement, la traverse supérieure (38) comprend une face supérieure (48), les moyens de déflection (30) étant fixé à ladite face supérieure (48).

6. Véhicule automobile (10) selon l'une des revendications 1 à 5, **caractérisé en ce que** les moyens de déflection (30) comprennent une liaison pivot (56) avec un axe de pivotement (58) transversal ; préférentiellement, les moyens de déflection (30) sont au-dessus du pare-brise (18).

7. Véhicule automobile (10) selon l'une des revendications 1 à 6, **caractérisé en ce que** le toit (20) comprend une protrusion (46) faisant saillie en avant du pare-brise (18), le passage supérieur (32) s'étendant entre la protrusion (46) et le pare-brise (18).

8. Véhicule automobile (10) selon l'une des revendications 1 à 7, **caractérisé en ce que** transversalement, le passage supérieur (32) comprend un centre (36), les moyens de déflection (30) étant transversalement au niveau dudit centre (36).

9. Véhicule automobile (10) selon l'une des revendications 1 à 8, **caractérisé en ce que** le véhicule automobile (10) comprend une roue centrale avant (22) ; et/ou le véhicule automobile (10) comprend un unique siège (40) dans l'habitacle passager (14).

10. Véhicule automobile (10) selon l'une des revendications 1 à 9, **caractérisé en ce que** l'habitacle passager (14) comprend des ouvertures latérales (28), lesdites ouvertures latérales (28) étant libres de portes latérales ; et/ou le véhicule automobile (10) comprend un plateau de chargement (24) derrière l'habitacle passager (14).
